# FASCICULE DE BREVET EUROPEEN

(11) **EP 3 490 883 B1**
(45) Date de publication et mention de la délivrance du brevet: **21.02.2024**
(21) Numéro de dépôt: 17734352.2
(22) Date de dépôt: 04.07.2017
(51) Int. Cl.: B63B 39/06

(54) **ÉOLIENNE MARINE COMPRENANT UNE ÉOLIENNE ET UN SUPPORT FLOTTANT**
MEERESWINDTURBINE MIT EINER WINDTURBINE UND EINER SCHWIMMENDEN TRÄGERSTRUKTUR
MARINE WIND TURBINE COMPRISING A WIND TURBINE AND A FLOATING SUPPORT

(30) Priorité: 26.07.2016 FR 1657171
(43) Date de publication de la demande: 05.06.2019
(73) Titulaire: IFP Energies nouvelles, 92852 Rueil-Malmaison (FR)
(72) Inventeur: EMERY, Adrien, 92500 Rueil-Malmaison (FR); BOZONNET, Pauline, 69003 Lyon (FR); SAEEDI, Navid, 94140 Alfortville (FR); DUPIN, Victor, 75017 Paris (FR)
(74) Mandataire: IFP Energies nouvelles
(86) Numéro de dépôt international: PCT/EP2017/066666
(87) Numéro de publication internationale: WO 2018/019525

(56) Documents cités:
- EP-A1- 1 719 697
- WO-A1-2014/184454
- CN-A- 101 774 424
- DE-A1- 1 756 091
- JP-A- 2008 062 677

## Description

La présente invention concerne une éolienne marine comprenant une éolienne et un support flottant (éolienne offshore).

Dans le domaine des éoliennes offshore, le support flottant supporte, en partie émergée, l'éolienne composée des pales, du rotor, de la nacelle et du mat fixé sur le support flottant. Ces supports flottants peuvent être ancrés au sol marin par des lignes d'ancrage tendues, semi-tendues ou des lignes d'ancrage caténaires. Le support flottant a pour but d'apporter la flottabilité et la stabilité de l'éolienne, de manière à reprendre les efforts exercés sur celle-ci, tout en limitant les mouvements de l'ensemble.

Divers supports flottants dédiés à l'installation d'éoliennes de plusieurs mégawatts au large des côtes sont en cours de développement dans de nombreux pays. Selon la profondeur du site considéré, plusieurs options de conception sont envisageables. Malgré leur grande diversité, plusieurs familles de support flottant se dégagent. On peut citer :
- les flotteurs de type SPAR (de l'anglais « Single Point Anchor Réservoir » signifiant réservoir avec unique point d'ancrage), caractérisés par une forme géométrique élancée et comportant un ballast important afin d'abaisser au maximum le centre de gravité de l'ensemble de la structure, et ainsi d'assurer la stabilité (on parle alors de stabilité de masse),
- les flotteurs de type barge : ce sont des supports à faible tirant d'eau et très larges. Leur stabilité est assurée par leur large surface de flottaison (on parle alors de stabilité de forme). Cependant, ce type de support est très sensible à la houle.
- les supports de type TLP (de l'anglais « Tension Leg Platform » qui peut être traduit par plateforme à lignes tendues), qui ont la particularité d'être amarrés au fond de la mer par des lignes tendues garantissant la stabilité de la structure,
- les flotteurs de type semi-submersible : ce sont des supports constitués d'au moins trois flotteurs reliés par des bras afin d'en assurer la rigidité. Ces supports ont en général un faible déplacement et présentent une inertie de la surface de flottaison importante, leur procurant ainsi un couple de redressement suffisant à leur stabilité. De plus, ce type de flotteur est moins sensible à la houle que les barges.

Pour toutes les familles de support flottant, les critères principaux de conception sont la stabilité, le contre-balancement de la force de poussée due au vent et la limitation des mouvements du support flottant.

Afin d'assurer la stabilité et de faibles mouvements du support flottant, une solution consiste à utiliser une plaque d'amortissement (en anglais « heave plate »), également appelée plaque amortisseur ou jupe, au niveau du flotteur du support flottant. La plaque d'amortissement dépasse du flotteur pour permettre d'amortir notamment les mouvements de pilonnement, mais aussi de tangage et roulis, du support flottant.

La demande de brevet FR 3005698 (WO 2014/184454) décrit un tel exemple de support flottant pourvu d'une plaque d'amortissement, dans le cadre d'un support flottant pour éolienne offshore. Les plaques d'amortissement décrites sur les figures 4 et 5 de cette demande de brevet présentent l'inconvénient principal de ne pas être suffisamment résistantes, en raison de leur faible épaisseur, et de leur forme spécifique (angle faible formé entre les parties de la plaque d'amortissement).

Pour pallier ces inconvénients, la présente invention concerne une éolienne marine comprenant un support flottant muni d'un flotteur principal et d'une plaque d'amortissement. La plaque d'amortissement comporte une section variable avec la profondeur, de manière à être performante d'un point de vue hydrodynamique. De plus, la plaque d'amortissement a une section horizontale minimale supérieure à la section horizontale du flotteur principal, ce qui garantit une résistance de la plaque d'amortissement.

### Le dispositif selon l'invention

L'invention concerne une éolienne marine comprenant une éolienne et un support flottant, le support flottant comportant au moins un flotteur principal et au moins une plaque d'amortissement, la surface de la section horizontale de ladite plaque d'amortissement étant supérieure à la surface Sc de ladite section horizontale dudit flotteur principal, ladite plaque d'amortissement étant fixée à la base dudit flotteur principal et comportant au moins une partie ayant une section horizontale variable avec la profondeur, caractérisée en ce que la surface minimale Sd1 de ladite section horizontale de ladite plaque d'amortissement est strictement supérieure à ladite surface Sc de ladite section horizontale dudit flotteur principal, ladite plaque d'amortissement comportant au moins une forme tronconique, le demi-angle au sommet du cône de ladite forme tronconique étant compris entre 15 et 60°.

Selon un mode de réalisation de l'invention, l'envergure de ladite plaque d'amortissement est comprise entre 1 et 15 m, de préférence entre 3 et 10 m.

Conformément à une mise en oeuvre, l'épaisseur de ladite plaque d'amortissement au niveau de la périphérie du flotteur principal est supérieure ou égale à 1,5 m.

Selon un aspect, ladite plaque d'amortissement comporte une pluralité de crans et/ou de saillies régulièrement répartis sur sa périphérie.

De manière avantageuse, lesdits crans et/ou lesdites saillies sont sensiblement rectangulaires.

Selon une option de réalisation, ladite plaque d'amortissement comporte une lame dans sa partie inférieure.

Selon une conception, ladite plaque d'amortissement comporte une section horizontale croissante avec la profondeur.

Selon une alternative, ladite plaque d'amortissement comporte une section horizontale décroissante avec la profondeur.

Alternativement, ladite plaque d'amortissement comporte une section horizontale croissante puis décroissante avec la profondeur.

Avantageusement, ladite plaque d'amortissement est réalisée en acier ou en béton. Conformément à un mode de réalisation de l'invention, ladite plaque d'amortissement comporte une section horizontale sensiblement circulaire, hexagonale, ou carrée.

### Présentation succincte des figures

D'autres caractéristiques et avantages du dispositif selon l'invention, apparaîtront à la lecture de la description ci-après d'exemples non limitatifs de réalisations, en se référant aux figures annexées et décrites ci-après.
La figure 1 illustre un support flottant selon un premier mode de réalisation de l'invention.
La figure 2 illustre un support flottant selon un deuxième mode de réalisation de l'invention.
Les figures 3a à 3c illustrent trois exemples de dimensionnement de la plaque d'amortissement selon le deuxième mode de réalisation de l'invention.
La figure 4 illustre un support flottant selon un troisième mode de réalisation de l'invention.
La figure 5 illustre un support flottant selon un quatrième mode de réalisation de l'invention.
La figure 6 illustre un support flottant selon un cinquième mode de réalisation de l'invention.
La figure 7 illustre un support flottant selon un sixième mode de réalisation de l'invention.

### Description détaillée de l'invention

La présente invention concerne une éolienne marine comprenant une éolienne et un support flottant.

Le support flottant selon l'invention peut être de la famille des flotteurs de type SPAR, de type barge, de type TLP, ou de type semi-submersible (par exemple du type tri-flotteurs).

Le support flottant comporte au moins un flotteur principal et au moins une plaque d'amortissement. Le flotteur principal apporte la flottabilité du support flottant. Le support flottant peut comprendre un ou plusieurs flotteurs principaux reliés entre eux. Le flotteur principal peut avoir, de manière non limitative, sensiblement une forme allongée : la hauteur (selon l'axe vertical en utilisation normale du support flottant) peut être équivalente ou supérieure aux autres dimensions horizontales du flotteur principal. Le flotteur principal peut avoir une forme quelconque, notamment une forme parallélépipédique, cylindrique, prismatique, conique, tronconique, etc. La surface de la section horizontale du flotteur principal est notée Sc. On appelle section horizontale, la section du flotteur principal (ou de la plaque d'amortissement) coupée par un plan horizontal, lorsque le support flottant est en position « normale » d'utilisation, par exemple sans poussée du vent. Pour un exemple de réalisation, pour lequel le flotteur principal a une forme cylindrique, la section horizontale est circulaire. Le flotteur principal peut être réalisé en acier ou en béton. Afin d'assurer la flottabilité, le flotteur principal peut comporter un volume interne rempli d'air.

Selon l'invention, la plaque d'amortissement est fixée sur le flotteur principal. La plaque d'amortissement a une faible épaisseur (hauteur selon l'axe vertical, lorsque le flotteur est en position « normale ») par rapport aux autres dimensions de la plaque, selon la position d'utilisation du support flottant. Selon l'invention, la plaque d'amortissement possède une section horizontale variable avec la profondeur. Ainsi, la plaque d'amortissement comporte une variation de son épaisseur avec la profondeur. De plus, la plaque d'amortissement possède une surface minimale de la section horizontale, notée Sd1, strictement supérieure à la surface Sc de la section horizontale du flotteur principal. Ainsi, seule la périphérie de la plaque d'amortissement est variable en épaisseur, et la périphérie de la plaque d'amortissement possède une extrémité fine, c'est-à-dire dont l'épaisseur est réduite. Cette variation de l'épaisseur avec une surface minimale permet d'avoir une plaque d'amortissement résistante d'un point de vue structurel, et d'avoir une extrémité fine pour favoriser l'amortissement hydrodynamique.

La plaque d'amortissement peut être réalisée en béton ou en métal, notamment en acier. La plaque d'amortissement peut comporter des renforts, reliant le flotteur principal et la plaque d'amortissement. Ces renforts peuvent être utilisés notamment lorsque la plaque d'amortissement est réalisée en métal. Ces renforts peuvent être perpendiculaires à la plaque, et avoir une épaisseur qui varie avec la profondeur.

Selon l'invention, la plaque d'amortissement est fixée à la base du flotteur principal. Cette construction permet une conception simple du support flottant, tout en assurant un bon amortissement du support flottant.

Conformément à une option de réalisation, le support flottant comporte une unique plaque d'amortissement. Cette construction permet de faciliter la conception du support flottant.

Alternativement, le support flottant peut comporter une pluralité de plaques d'amortissement fixées à plusieurs hauteurs du flotteur principal, de manière à optimiser l'amortissement du support flottant.

Selon un mode de réalisation, la plaque d'amortissement possède une section horizontale ayant une forme identique à la section horizontale du flotteur principal, avec des dimensions supérieures. En d'autres termes, la section horizontale de la plaque d'amortissement peut être une homothétie de la section horizontale du flotteur principal. Par exemple, si le flotteur principal est cylindrique, alors la section horizontale de la plaque d'amortissement peut être circulaire. Selon un autre exemple, si le flotteur principal est parallélépipédique, alors la section horizontale de la plaque d'amortissement peut être rectangulaire. Selon un troisième exemple, si le flotteur principal a une section hexagonale, alors la section horizontale de la plaque d'amortissement peut être hexagonale.

Selon une alternative, la plaque d'amortissement peut avoir une forme différente de la forme du flotteur principal. Par exemple, le flotteur principal peut avoir une forme sensiblement cylindrique et la plaque d'amortissement une forme polygonale, par exemple hexagonale, et inversement.

Selon un mode de réalisation de l'invention, le flotteur principal et la plaque d'amortissement sont centrés l'un par rapport à l'autre.

En outre, si le support flottant est de type multi-flotteurs, par exemple tri-flotteurs, alors une plaque d'amortissement peut être prévue à la base de chacun des flotteurs, par exemple des trois flotteurs.

Conformément à une mise en oeuvre de l'invention, la variation de la section horizontale de la plaque d'amortissement avec la profondeur peut être continue sur toute la hauteur de la plaque d'amortissement et être linéaire : la plaque d'amortissement peut alors avoir au moins une forme sensiblement tronconique. Selon une alternative, la variation de la section horizontale de la plaque d'amortissement avec la profondeur peut être continue sur toute la hauteur de la plaque d'amortissement, mais être non linéaire, par exemple concave, convexe... Alternativement, la section peut être variable sur une certaine hauteur, puis la section peut être constante. Selon une conception, la plaque d'amortissement peut avoir une variation réalisée « en escalier » (c'est-à-dire formée par empilement de plusieurs plaques de dimensions différentes).

Conformément à l'invention, la plaque d'amortissement possède au moins une partie tronconique, de manière à former la variation de la section horizontale de la plaque d'amortissement.

Selon un mode de réalisation de l'invention, la plaque d'amortissement peut posséder une section horizontale croissante avec la profondeur. Ainsi, en position d'utilisation du support flottant, la plaque d'amortissement a une plus grande section à sa base, et une plus petite section à son sommet. De cette manière, la plaque d'amortissement s'affine avec la profondeur (épaisseur qui diminue). Cette croissance de la section horizontale de la plaque d'amortissement, permet de générer une forme hydrodynamique, qui favorise l'amortissement du pilonnement, ainsi que du roulis et tangage. Cette construction présente l'avantage d'être facilement mise en oeuvre.

En variante, la plaque d'amortissement peut posséder une section horizontale décroissant avec la profondeur. Ainsi, en position d'utilisation du support flottant, la plaque d'amortissement a une plus grande section à son sommet et une plus petite base. De cette manière, la plaque d'amortissement s'affine en son sommet (épaisseur qui diminue). Cette décroissance de la section horizontale de la plaque d'amortissement permet de générer une forme hydrodynamique, qui favorise l'amortissement du pilonnement, du roulis et du tangage.

Alternativement, la forme de la plaque d'amortissement peut être composée de deux volumes tronconiques, dont les sections de plus grandes surfaces sont juxtaposées en son centre. Les deux volumes tronconiques ont, de préférence, des dimensions identiques. Ainsi, la section horizontale de la plaque d'amortissement croît, avec la profondeur, sur une première hauteur (correspondant à la partie supérieure de la plaque d'amortissement), puis décroît, avec la profondeur, sur une deuxième hauteur (correspondant à la partie inférieure de la plaque d'amortissement). Ainsi, la plaque d'amortissement a une plus grande section en son centre et des sections plus petites en sa base et en son sommet. Cette conception de la plaque d'amortissement permet de générer une forme hydrodynamique, qui favorise l'amortissement du pilonnement, du roulis et du tangage.

Selon un mode de réalisation de l'invention, afin d'assurer une bonne résistance du support flottant, l'envergure de la plaque d'amortissement peut être comprise entre 1 et 15 m, de préférence entre 3 et 10 m. On appelle envergure de la plaque d'amortissement, la distance minimale entre l'extrémité périphérique du flotteur principal, et l'extrémité périphérique de la plaque d'amortissement. Par exemple, si le flotteur principal et la plaque d'amortissement sont cylindriques, alors l'envergure correspond à la différence des rayons entre le flotteur principal et la plaque d'amortissement. Selon un autre exemple, si le flotteur principal et la plaque d'amortissement sont de section carré, alors l'envergure correspond à la moitié de la différences des côtés entre le flotteur principal et la plaque d'amortissement. Une telle envergure garantit des dimensions minimales de la plaque d'amortissement par rapport aux dimensions du flotteur principal, ce qui permet d'augmenter la résistance de celle-ci. Pour des raisons structurelles on se limite à une envergure de 12 m de jupe, voire 10 m si le rayon du cylindre principal est lui-même important (typiquement 12m).

Selon un mode de réalisation de l'invention, en périphérie de la plaque d'amortissement, l'épaisseur de la plaque d'amortissement peut être la plus fine possible, de préférence inférieure à 1 m, et de manière très préférée inférieure à 0,5 m. Cette fine épaisseur permet de favoriser l'amortissement du support flottant.

Selon un exemple non limitatif de réalisation, à la racine de la plaque d'amortissement, une épaisseur de la plaque d'amortissement, ou le cas échéant des renforts, peut être supérieure ou égale à 1.5 m. En d'autres termes, selon un exemple, l'épaisseur de la plaque d'amortissement au niveau de la périphérie du flotteur principal peut être supérieure ou égale à 1.5 m. Cette épaisseur de la racine de la plaque d'amortissement permet de garantir une résistance optimisée de la plaque d'amortissement.

Selon l'invention, le demi-angle au sommet du cône de ladite forme tronconique peut être compris entre 15 et 60°. Ainsi, l'hydrodynamique de la plaque d'amortissement est optimisée.

Conformément à une option de réalisation de l'invention, la plaque d'amortissement peut comprendre une pluralité de crans et/ou de saillies régulièrement répartis sur sa périphérie. De cette manière, il est possible d'augmenter la circonférence de la plaque d'amortissement, ce qui a pour effet d'augmenter la zone où le détachement tourbillonnaire a lieu, sans pour autant augmenter la surface de la plaque d'amortissement. Les crans et/ou les saillies peuvent être de toutes formes, notamment rectangulaires, demi-circulaires, sinusoïdales etc. Les crans peuvent être formés notamment par usinage de la plaque d'amortissement.

Selon une mise en oeuvre de l'invention, la plaque d'amortissement peut comprendre une lame, de préférence métallique, et de manière très préférée en acier, en saillie de la base de la plaque d'amortissement. On appelle lame, une fine épaisseur de matériau qui est en saillie sur toute la périphérie de la plaque d'amortissement. L'épaisseur de la lame peut être comprise entre 1 et 20 cm, et peut valoir sensiblement 5 cm. Cette lame permet d'avoir une plaque d'amortissement suffisamment épaisse pour assurer la résistance structurelle, et d'avoir une extrémité très fine pour optimiser l'amortissement.

Selon un exemple de réalisation non limitatif, la lame peut avoir une longueur (entre l'extrémité de la plaque d'amortissement et l'extrémité de la lame) de 0,5 m, une épaisseur de 5 cm, pour un flotteur principal ayant un rayon de 12 m et une plaque d'amortissement ayant un rayon maximal de 21,5 m.

Selon une conception, le support flottant peut comprendre des moyens de ballastage permanent. Ces moyens de ballastage permanents peuvent être situés à la base du flotteur principal, par exemple au-dessus de la plaque d'amortissement. Le ballast permanent permet l'équilibre hydrostatique du support flottant. Il peut être constitué de béton, d'eau de mer, ou de toute matière solide ou liquide pesante. Les masses de ces différentes matières peuvent être réparties pour satisfaire à la fois des critères de stabilité statique et dynamique, mais aussi pour diminuer le coût de fabrication du support flottant.

Selon une caractéristique, le support flottant peut comprendre au moins un, de préférence plusieurs, caissons de ballastage dynamique, dont le volume peut être ballasté ou dé-ballasté en fonction des conditions d'utilisation du support flottant. Le ballast utilisé dans ces caissons peut être notamment de l'eau de mer. Ces caissons de ballastage dynamique peuvent être inclus dans le flotteur principal, par exemple au-dessus de la plaque d'amortissement, et le cas échéant au-dessus des moyens de ballastage permanent. Les caissons de ballastage dynamique permettent de corriger et régler l'angle d'assiette du support flottant, et donc l'axe du système agencé sur le support flottant. Les caissons de ballastage dynamique peuvent être situés à l'intérieur du flotteur principal, dans sa partie périphérique.

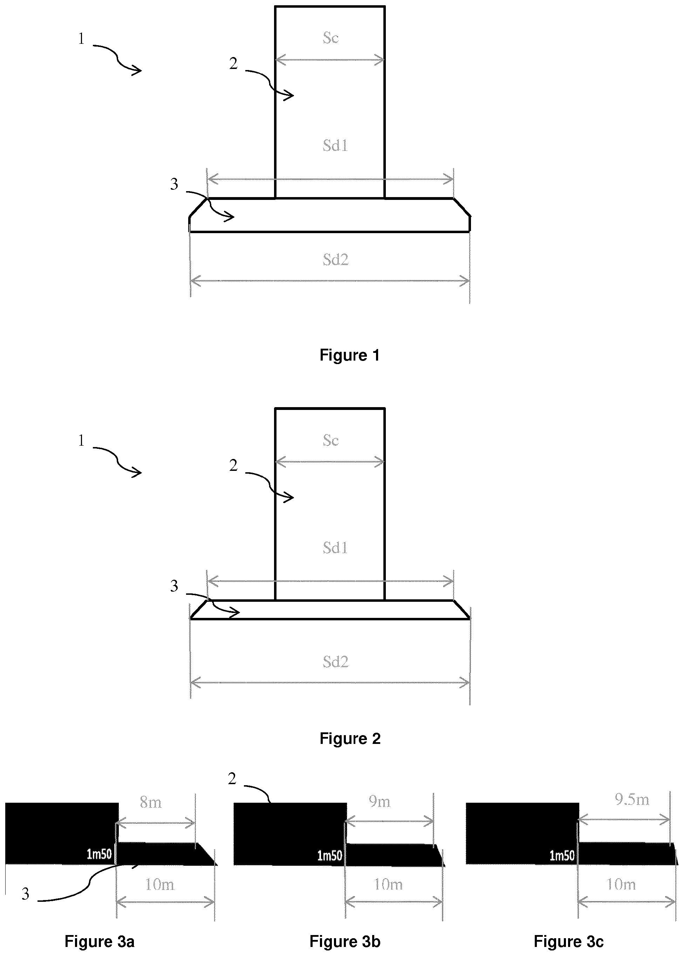

La figure 1 illustre, de manière schématique et non limitative, un support flottant selon un premier mode de réalisation de l'invention. Le support flottant 1 comporte un flotteur principal 2 sensiblement cylindrique, et de section horizontale Sc. Le support flottant 1 comporte également une plaque d'amortissement 3 fixée à la base du flotteur principal 2. La plaque d'amortissement 3 a une section horizontale strictement supérieure à la section horizontale du flotteur principal. La plaque d'amortissement 3 a une partie supérieure sensiblement tronconique : la section horizontale croît de manière continue et linéaire entre la section horizontale minimale Sd1 et la section horizontale maximale Sd2. La plaque d'amortissement 3 a une partie inférieure sensiblement cylindrique : sa section horizontale est constante de section Sd2.

La figure 2 illustre, de manière schématique et non limitative, un support flottant selon un deuxième mode de réalisation de l'invention. Le support flottant 1 comporte un flotteur principal 2 sensiblement cylindrique, et de section horizontale Sc. Le support flottant 1 comporte également une plaque d'amortissement 3 fixée à la base du flotteur principal 2. La plaque d'amortissement 3 a une section horizontale strictement supérieure à la section horizontale du flotteur principal. La plaque d'amortissement 3 est sensiblement tronconique : la section horizontale croît de manière continue et linéaire entre la section horizontale minimale Sd1 et la section horizontale maximale Sd2.

Les figures 3a à 3c, illustrent, de manière schématique et non limitative, trois dimensionnements de la plaque d'amortissement pour le deuxième mode de réalisation de l'invention. Les figures 3a à 3c sont des demi vues en coupe du support flottant.

Pour la variante de la figure 3a, la hauteur de la plaque d'amortissement 3 est d'1,50 m, la distance minimale (dans un plan horizontal, pour la surface minimale de la section horizontale) entre le flotteur principal 2 et la périphérie de la plaque d'amortissement 3 est de 8 m, et la distance maximale (dans un plan horizontal, pour la surface maximale de la section horizontale) entre le flotteur principal 2 et la périphérie de la plaque d'amortissement 3 est de 10 m. La distance maximale correspond à l'envergure de la plaque d'amortissement.

Pour la variante de la figure 3b, la hauteur de la plaque d'amortissement 3 est d'1,50 m, la distance minimale (dans un plan horizontal, pour la surface minimale de la section horizontale) entre le flotteur principal 2 et la périphérie de la plaque d'amortissement 3 est de 9 m, et la distance maximale (dans un plan horizontal, pour la surface minimale de la section horizontale) entre le flotteur principal 2 et la périphérie de la plaque d'amortissement 3 est de 10 m. La distance maximale correspond à l'envergure de la plaque d'amortissement.

Pour la variante de la figure 3c, la hauteur de la plaque d'amortissement 3 est d'1,50 m, la distance minimale (dans un plan horizontal, pour la surface minimale de la section horizontale) entre le flotteur principal 2 et la périphérie de la plaque d'amortissement 3 est de 9,5 m, et la distance maximale (dans un plan horizontal, pour la surface minimale de la section horizontale) entre le flotteur principal 2 et la périphérie de la plaque d'amortissement 3 est de 10 m. La distance maximale correspond à l'envergure de la plaque d'amortissement.

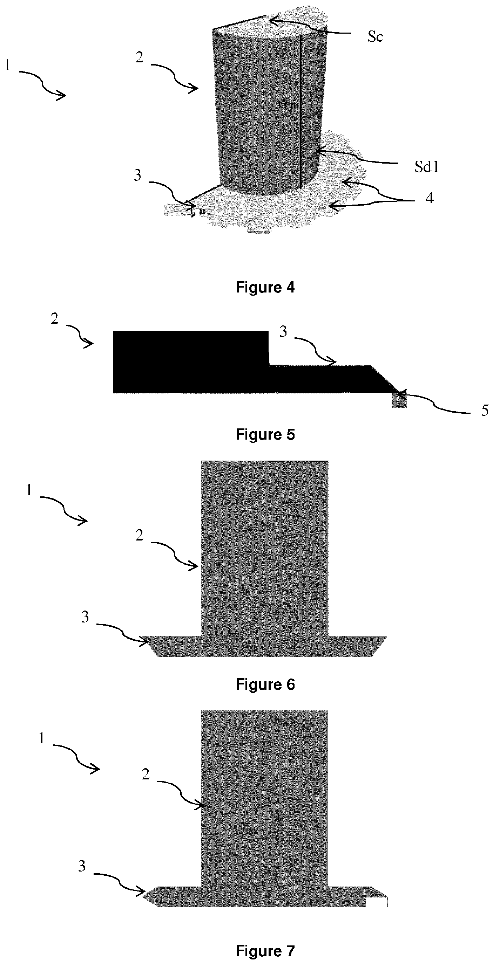

La figure 4 illustre, de manière schématique et non limitative un support flottant selon un troisième mode de réalisation. La figure 4 est une vue tridimensionnelle représentant la moitié d'un support flottant. Le support flottant 1 comporte un flotteur principal 2 sensiblement cylindrique, et de section horizontale Sc. Le support flottant 1 comporte également une plaque d'amortissement 3 fixée à la base du flotteur principal 2. Sur cette figure, l'épaisseur de la plaque d'amortissement n'est pas représentée. La plaque d'amortissement 3 a une section horizontale strictement supérieure à la section horizontale du flotteur principal. La plaque d'amortissement 3 est sensiblement tronconique (non représenté) : la section horizontale croît de manière continue et linéaire entre la section horizontale minimale Sd1 et la section horizontale maximale (non représentée). En outre, la plaque d'amortissement 3 comporte une pluralité de crans 4, formés dans la périphérie de la plaque d'amortissement 3. Les crans 4 sont répartis régulièrement sur cette périphérie. Les crans ont sensiblement une forme rectangulaire. La plaque d'amortissement 3 peut comporter entre 5 et 30 crans.

La figure 5 illustre, de manière schématique et non limitative un support flottant selon un quatrième mode de réalisation. La figure 5 est une demi vue en coupe d'un support flottant. Le support flottant 1 comporte un flotteur principal 2 sensiblement cylindrique. Le support flottant 1 comporte également une plaque d'amortissement 3 fixée à la base du flotteur principal 2. La plaque d'amortissement 3 a une section horizontale strictement supérieure à la section horizontale du flotteur principal 2. La plaque d'amortissement 3 est sensiblement tronconique : la section horizontale croît, avec la profondeur, de manière continue et linéaire entre la section horizontale minimale supérieure et la section horizontale maximale inférieure. En outre, la plaque d'amortissement 3 comporte une lame en acier 5 en saillie sur toute la périphérie de la plaque d'amortissement. La lame en acier 5 est fixée à la base de la plaque d'amortissement 3.

La figure 6 illustre, de manière schématique et non limitative un support flottant selon un cinquième mode de réalisation. La figure 6 est une vue en coupe d'un support flottant. Le support flottant 1 comporte un flotteur principal 2 sensiblement cylindrique. Le support flottant 1 comporte également une plaque d'amortissement 3 fixée à la base du flotteur principal 2. La plaque d'amortissement 3 a une section horizontale strictement supérieure à la section horizontale du flotteur principal 2. La plaque d'amortissement 3 est sensiblement tronconique : la section horizontale décroît, avec la profondeur, de manière continue et linéaire entre la section horizontale maximale supérieure et la section horizontale minimale inférieure.

La figure 7 illustre, de manière schématique et non limitative un support flottant selon un sixième mode de réalisation. La figure 7 est une vue en coupe d'un support flottant. Le support flottant 1 comporte un flotteur principal 2 sensiblement cylindrique. Le support flottant 1 comporte également une plaque d'amortissement 3 fixée à la base du flotteur principal 2. La plaque d'amortissement 3 a une section horizontale strictement supérieure à la section horizontale du flotteur principal 2. La forme de plaque d'amortissement 3 est composée de deux volumes tronconiques, dont les sections de plus grandes surfaces sont juxtaposées. Les deux volumes tronconiques ont, de préférence, des dimensions identiques. Ainsi, la section horizontale de la plaque d'amortissement 3 croît, avec la profondeur, sur une première hauteur (correspondant à la partie supérieure de la plaque d'amortissement 3), puis décroît, avec la profondeur, sur une deuxième hauteur (correspondant à la partie inférieure de la plaque d'amortissement 3).

La présente invention concerne également une installation d'éolienne sur une étendue d'eau (mer par exemple). L'installation comprend une éolienne à axe vertical ou à axe horizontal, et un support flottant selon l'une quelconque des combinaisons de variantes décrites précédemment. Par exemple, une éolienne à axe horizontal est composée de pales, du rotor, de la nacelle et du mat fixé sur le support flottant. Le support flottant peut être ancré au sol marin par des lignes d'ancrage tendues, semi-tendues ou des lignes d'ancrage caténaires. Le support flottant a pour but d'apporter la flottabilité et la stabilité de l'éolienne, de manière à reprendre les efforts exercés sur celle-ci, contrebalancer la poussée due au vent, tout en limitant les mouvements de l'ensemble.

## Revendications

1. Éolienne marine comprenant une éolienne et un support flottant, le support flottant (1) comportant au moins un flotteur principal (2) et au moins une plaque d'amortissement (3), la surface de la section horizontale de ladite plaque d'amortissement étant supérieure à la surface Sc de ladite section horizontale dudit flotteur principal (2), ladite plaque d'amortissement (3) étant fixée à la base dudit flotteur principal (2) et comportant au moins une partie ayant une section horizontale variable avec la profondeur, **caractérisée en ce que** la surface minimale Sd1 de ladite section horizontale de ladite plaque d'amortissement (3) est strictement supérieure à ladite surface Sc de ladite section horizontale dudit flotteur principal (2), ladite plaque d'amortissement (3) comportant au moins une forme tronconique, le demi-angle au sommet du cône de ladite forme tronconique étant compris entre 15 et 60°.

2. Éolienne marine selon la revendication 1, dans lequel l'envergure de ladite plaque d'amortissement (3) est comprise entre 1 et 15 m, de préférence entre 3 et 10 m.

3. Éolienne marine selon l'une des revendications précédentes, dans lequel l'épaisseur de ladite plaque d'amortissement (3) au niveau de la périphérie du flotteur principal (2) est supérieure ou égale à 1,5 m.

4. Éolienne marine selon l'une des revendications précédentes, dans lequel ladite plaque d'amortissement (3) comporte une pluralité de crans (4) et/ou de saillies régulièrement répartis sur sa périphérie.

5. Éolienne marine selon la revendication 4, dans lequel lesdits crans (4) et/ou lesdites saillies sont sensiblement rectangulaires.

6. Éolienne marine selon l'une des revendications précédentes, dans lequel ladite plaque d'amortissement (3) comporte une lame (5) dans sa partie inférieure.

7. Éolienne marine selon l'une des revendications précédentes, dans lequel ladite plaque d'amortissement (3) comporte une section horizontale croissante avec la profondeur.

8. Éolienne marine selon l'une des revendications 1 à 6, dans lequel ladite plaque d'amortissement (3) comporte une section horizontale décroissante avec la profondeur.

9. Éolienne marine selon l'une des revendications 1 à 6, dans lequel ladite plaque d'amortissement (3) comporte une section horizontale croissante puis décroissante avec la profondeur.

10. Éolienne marine selon l'une des revendications précédentes, dans lequel ladite plaque d'amortissement (3) est réalisée en acier ou en béton.

11. Éolienne marine selon l'une des revendications précédentes, dans lequel ladite plaque d'amortissement (3) comporte une section horizontale sensiblement circulaire, hexagonale, ou carrée.

## Patentansprüche

1. Meereswindturbine mit einer Windturbine und einem schwimmenden Träger (1), wobei der schwimmende Träger wenigstens einen Hauptschwimmer (2) und wenigstens eine Dämpfungsplatte (3) aufweist, wobei die Fläche des horizontalen Querschnitts der Dämpfungsplatte größer als die Fläche Sc des horizontalen Querschnitts des Hauptschwimmers (2) ist, wobei die Dämpfungsplatte (3) an der Basis des Hauptschwimmers befestigt ist und wenigstens einen Abschnitt mit einem horizontalen Querschnitt aufweist, der mit der Tiefe variabel ist, **dadurch gekennzeichnet, dass** die Mindestfläche Sd1 des horizontalen Querschnitts der Dämpfungsplatte (3) streng größer als die Fläche Sc des horizontalen Querschnitts des Hauptschwimmers (2) ist, wobei die Dämpfungsplatte (3) wenigstens eine Kegelstumpfform aufweist, wobei der Halbwinkel am Scheitel des Kegels der Kegelstumpfform zwischen 15 und 60° beträgt.

2. Meereswindturbine nach Anspruch 1, wobei die Spannweite der Dämpfungsplatte (3) zwischen 1 und 15 m, vorzugsweise zwischen 3 und 10 m beträgt.

3. Meereswindturbine nach einem der vorhergehenden Ansprüche, wobei die Dicke der Dämpfungsplatte (3) am Umfang des Hauptschwimmers (2) größer als oder gleich 1,5 m ist.

4. Meereswindturbine nach einem der vorhergehenden Ansprüche, wobei die Dämpfungsplatte (3) eine Mehrzahl von Stufen (4) und/oder Vorsprüngen aufweist, die regelmäßig über ihren Umfang verteilt sind.

5. Meereswindturbine nach Anspruch 4, wobei die Stufen (4) und/oder die Vorsprünge im Wesentlichen rechteckig sind.

6. Meereswindturbine nach einem der vorhergehenden Ansprüche, wobei die Dämpfungsplatte (3) ein Blatt (5) in ihrem unteren Abschnitt aufweist.

7. Meereswindturbine nach einem der vorhergehenden Ansprüche, wobei die Dämpfungsplatte (3) einen horizontalen Querschnitt aufweist, der mit der Tiefe zunimmt.

8. Meereswindturbine nach einem der Ansprüche 1 bis 6, wobei die Dämpfungsplatte (3) einen horizontalen Querschnitt aufweist, der mit der Tiefe abnimmt.

9. Meereswindturbine nach einem der Ansprüche 1 bis 6, wobei die Dämpfungsplatte (3) einen horizontalen Querschnitt aufweist, der mit der Tiefe zunimmt, dann abnimmt.

10. Meereswindturbine nach einem der vorhergehenden Ansprüche, wobei die Dämpfungsplatte (3) aus Stahl oder aus Beton hergestellt ist.

11. Meereswindturbine nach einem der vorhergehenden Ansprüche, wobei die Dämpfungsplatte (3) einen horizontalen Querschnitt aufweist, der im Wesentlichen kreisförmig, sechseckig oder quadratisch ist.

## Claims

1. Marine wind turbine comprising a wind turbine and a floating support, the floating support (1) comprising at least one main float (2) and at least one heave plate (3), the surface area of the horizontal cross section of said heave plate being greater than the surface area Sc of said horizontal cross section of said main float (2), said heave plate (3) being fixed to the base of said main float (2) and comprising at least one portion having a horizontal cross section that is variable with depth, **characterized in that** the minimum surface area Sd1 of said horizontal cross section of said heave plate (3) is strictly greater than said surface area Sc of said horizontal cross section of said main float (2), said heave plate (3) comprising at least one frustoconical shape, the half-angle at the vertex of the cone of said frustoconical shape being between 15 and 60°.

2. Marine wind turbine according to Claim 1, wherein the span of said heave plate (3) is between 1 and 15 m, preferably between 3 and 10 m.

3. Marine wind turbine according to either of the preceding claims, wherein the thickness of said heave plate (3) at the periphery of the main float (2) is greater than or equal to 1.5 m.

4. Marine wind turbine according to one of the preceding claims, wherein said heave plate (3) comprises a plurality of notches (4) and/or protrusions regularly distributed over its periphery.

5. Marine wind turbine according to Claim 4, wherein said notches (4) and/or said protrusions are substantially rectangular.

6. Marine wind turbine according to one of the preceding claims, wherein said heave plate (3) comprises a strip (5) in its lower portion.

7. Marine wind turbine according to one of the preceding claims, wherein said heave plate (3) comprises a horizontal cross section that increases with depth.

8. Marine wind turbine according to one of Claims 1 to 6, wherein said heave plate (3) comprises a horizontal cross section that decreases with depth.

9. Marine wind turbine according to one of Claims 1 to 6, wherein said heave plate (3) comprises a horizontal cross section that increases then decreases with depth.

10. Marine wind turbine according to one of the preceding claims, wherein said heave plate (3) is made from steel or from concrete.

11. Marine wind turbine according to one of the preceding claims, wherein said heave plate (3) comprises a substantially circular, hexagonal or square horizontal cross section.
